# EUROPEAN PATENT APPLICATION

(11) **EP 4 787 786 A1**
(43) Date of publication of application: **05.08.2026**
(21) Application number: 23953687.3
(22) Date of filing: 28.09.2023
(51) Int. Cl.: H04L 25/02

(54) **WIRELESS COMMUNICATION METHOD AND APPARATUS, DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: LIN, Yanan, Dongguan, Guangdong 523860 (CN); XU, Jing, Dongguan, Guangdong 523860 (CN); TIAN, Wenqiang, Dongguan, Guangdong 523860 (CN)
(74) Representative: Novagraaf Technologies
(86) International application number: PCT/CN2023/122674
(87) International publication number: WO 2025/065539

(57) **Abstract**

A wireless communication method and apparatus, a device and a storage medium, which relate to the technical field of communications. The method comprises: after correctly receiving first information, a first device sending second information in a second channel, wherein the first information is encoded and then carried in a first channel for transmission, and the second information is information related to the first channel (210). After correctly receiving first information which is carried in a first channel for transmission, a first device generates and sends second information, the second information being information related to the first channel; thus, the first device achieves iterative channel measurement, and the accuracy of channel measurement/estimation is improved.

## Description

### TECHNICAL FIELD

The present disclosure relates to the technical field of communications, and in particular, relates to a method and apparatus for wireless communication, and a device and a storage medium thereof.

### RELATED ART

In wireless communication systems, information is typically carried on channels for transmission.

Currently, further research is still needed regarding improvement of the accuracy of channel measurement/estimation.

### SUMMARY

Embodiments of the present disclosure provide a method and apparatus for wireless communication, and a device and a storage medium thereof. The technical solutions are as follows.

According to an aspect of the embodiments of the present disclosure, a method for wireless communication is provided. The method is performed by a first device, and the method includes: transmitting second information on a second channel upon correctly receiving first information, wherein the first information is encoded and carried on a first channel for transmission, and the second information is information related to the first channel.

According to an aspect of the embodiments of the present disclosure, a method for wireless communication is provided. The method is performed by a second device, and the method includes: transmitting first information on a first channel, wherein the first information is encoded and carried on a first channel for transmission; and receiving second information transmitted on a second channel, wherein the second information is information related to the first channel, and the second information is transmitted in response to the first information being correctly received.

According to an aspect of the embodiments of the present disclosure, an apparatus for wireless communication is provided. The apparatus includes: a transmitting module, configured to transmit second information on a second channel upon correctly receiving first information, wherein the first information is encoded and carried on a first channel for transmission, and the second information is information related to the first channel.

According to an aspect of the embodiments of the present disclosure, an apparatus for wireless communication is provided. The apparatus includes: a transmitting module, configured to transmit first information on a first channel, wherein the first information is encoded and carried on a first channel for transmission; and a receiving module, configured to receive second information transmitted on a second channel, wherein the second information is information related to the first channel, and the second information is transmitted in response to the first information being correctly received.

According to an aspect of the embodiments of the present disclosure, a device is provided. The device includes a processor and a memory storing one or more executable instructions, wherein the processor, when loading and executing the one or more executable instructions, is caused to perform the method for wireless communication at the first device, or the method for wireless communication at the second device.

According to an aspect of the embodiments of the present disclosure, a computer-readable storage medium is provided. The computer-readable storage medium stores one or more executable instructions, wherein the one or more executable instructions, when loaded and executed by a processor, cause the processor to perform the method for wireless communication at the first device or the method for wireless communication at the second device.

According to an aspect of the embodiments of the present disclosure, a chip is provided. The chip, when running, is configured to cause a device equipped with the chip to perform the method for wireless communication at the first device or the method for wireless communication at the second device.

According to an aspect of the embodiments of the present disclosure, a computer program product is provided. The computer program product includes one or more computer instructions stored in a computer-readable storage medium, wherein the one or more computer instructions, when loaded and executed by a processor of a computer device, cause the computer device to perform the method for wireless communication at the first device or the method for wireless communication at the second device.

The technical solutions according to the embodiments of the present disclosure achieve at least the following beneficial effects.

The technical solution according to the embodiments of the present disclosure enables the first device to generate and transmit the second information upon correctly receiving the first information transmitted on the first channel, wherein the second information is related to the first channel, thereby allowing the first device to implement iterative channel measurement and improving the accuracy of channel measurement/estimation.

### BRIEF DESCRIPTION OF DRAWINGS

FIG. 1 is a schematic diagram of a network architecture according to some embodiments of the present disclosure;
FIG. 2 is a flowchart of a method for wireless communication according to some embodiments of the present disclosure;
FIG. 3 is a schematic diagram of determining a first channel based on a periodic parameter according to some embodiments of the present disclosure;
FIG. 4 is a schematic diagram of a time-domain timing relationship of a first channel, a second channel, and a third channel according to some embodiments of the present disclosure;
FIG. 5 is a schematic diagram of simultaneous transmission of sixth information and fifth information according to some embodiments of the present disclosure;
FIG. 6 is a schematic diagram of independent transmission of sixth information according to some embodiments of the present disclosure;
FIG. 7 is a schematic diagram of simultaneous transmission of sixth information and acknowledgment information according to some embodiments of the present disclosure;
FIG. 8 is a schematic diagram of sixth information including identification information of a first channel according to some embodiments of the present disclosure;
FIG. 9 is a flowchart of a method for wireless communication according to some embodiments of the present disclosure;
FIG. 10 is a block diagram of an apparatus for wireless communication according to some embodiments of the present disclosure;
FIG. 11 is a block diagram of an apparatus for wireless communication according to some embodiments of the present disclosure; and
FIG. 12 is a schematic structural diagram of a device according to some embodiments of the present disclosure.

### DETAILED DESCRIPTION

For clearer descriptions of the objectives, technical solutions, and advantages of the present disclosure, the embodiments of the present disclosure are further described in detail hereinafter with reference to the accompanying drawings.

The network architecture and service scenarios described in the embodiments of the present disclosure are provided to more clearly illustrate the technical solutions of the embodiments, and do not constitute limitations on the technical solutions offered by these embodiments. As recognized by those skilled in the art, with the evolution of network architectures and emergence of new service scenarios, the technical solutions provided herein remain applicable to similar technical challenges. The terminology used in the present disclosure is employed solely for describing specific embodiments and does not purport to restrict the scope of the present disclosure.

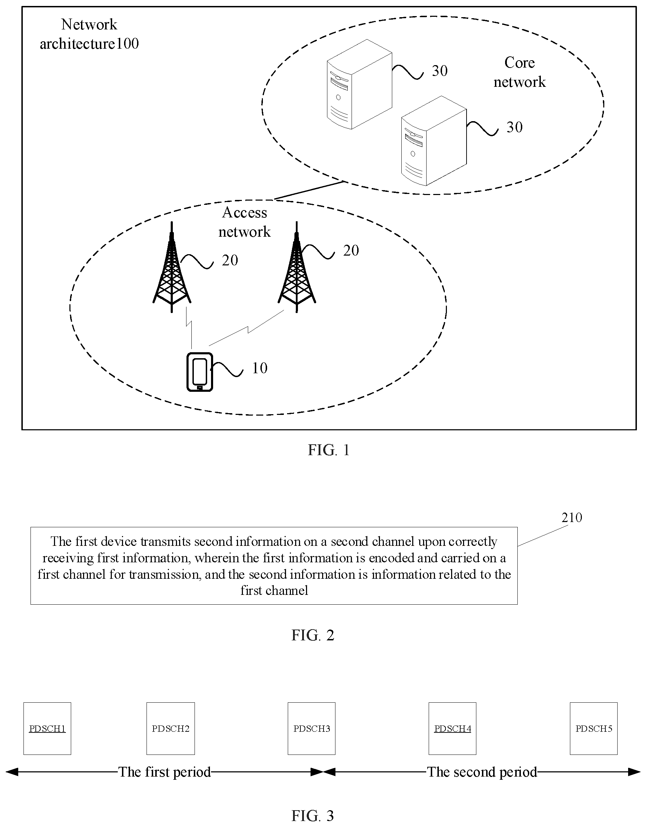

FIG. 1 is a schematic diagram of a network architecture 100 according to some embodiments of the present disclosure. The network architecture 100 may involve a terminal device 10, an access network device 20, and a core network element 30.

The terminal device 10 may be a user equipment (UE), an access terminal, a subscriber unit, a subscriber station, a mobile station, a mobile platform, a remote station, a remote terminal, a mobile device, a wireless communication device, a user agent, or a user apparatus. In some embodiments, the terminal device 10 may also be a cellular phone, a cordless phone, a Session Initiation Protocol (SIP) phone, a wireless local loop (WLL) station, a personal digital assistant (PDA), a handheld device with a wireless communication function, a computing device or another processing device connected to a wireless modem, a vehicle-mounted device, a wearable device, a terminal device in a 5G system, a terminal device in an evolved public land mobile network (PLMN), or the like, which is not limited in the embodiments of the present disclosure. For the convenience of description, the devices mentioned above are collectively referred to as the terminal device. A plurality of terminal devices 10 are usually deployed. At least one terminal device 10 may be distributed in a cell managed by each access network device 20. A terminal device may also be referred to simply as a terminal or UE, and those skilled in the art shall understand its meaning.

The access network device 20 is a device deployed in an access network to provide a wireless communication function for the terminal device 10. The access network device 20 may include various forms of macro base stations, micro base stations, relay stations, access points, and the like. In systems employing different radio access technologies, devices with the function of the access network device may have different names, for example, gNodeB or gNB in a 5G NR system. As the communication technologies evolve, the name "access network device" may change. For the convenience of description, in the embodiments of the present disclosure, the above apparatuses providing the wireless communication function for the terminal device 10 are collectively referred to as the access network device. In some embodiments, a communication relationship may be established between the terminal device 10 and the core network element 30 using the access network device 20. For example, in an LTE system, the access network device 20 may be an evolved universal terrestrial radio access network (EUTRAN) or at least one eNodeB in the EUTRAN. In a 5G NR system, the access network device 20 may be a radio access network (RAN) or at least one gNB in the RAN. In the embodiments of the present disclosure, unless otherwise specified, the term "network device" is the access network device 20, e.g., a base station.

The core network element 30 is an element deployed in a core network. The core network element 30 mainly functions to provide a user connection, user management and service bearing, and to provide an interface to an external network as a bearer network. For example, core network elements in the 5G NR system may include elements such as an access and mobility management function (AMF) entity, a user plane function (UPF) entity, and a session management function (SMF) entity.

In some embodiments, the access network device 20 communicates with the core network element 30 using a specific air interface technology, e.g., an NG interface in the 5G NR system. The access network device 20 communicates with the terminal device 10 using a specific air interface technology, e.g., over a Uu interface.

The "5G NR system" in the embodiments of the present disclosure may also be referred to as a 5G system or an NR system, but those skilled in the art may understand its meaning. The technical solutions according to the embodiments of the present disclosure may be applicable to the LTE system, the 5G NR system, an evolved system subsequent to the 5G NR system (e.g., Beyond 5G (B5G) System, 6^{th} Generation System), a narrowband Internet of things (NB-IoT) system, and other communication systems. This is not limited in the present disclosure.

In the embodiments of the present disclosure, the network device provides services for a cell. The terminal device communicates with the network device over a transmission resource (for example, a frequency-domain resource or a spectrum resource) on a carrier used by the cell. The cell may be a cell corresponding to the network device (for example, the base station). The cell may belong to a macro base station or a base station corresponding to a small cell. The small cell herein may include a metro cell, a micro cell, a pico cell, a femto cell, and the like. These small cells have the characteristics of small coverage and low transmit power, and are applicable to providing high-rate data transmission services.

With the development of wireless communication technologies, integrated sensing and communication and wireless artificial intelligence (AI) have emerged. Hereinafter is a brief introduction to the two technologies.

Wireless communication and sensing are two important applications of the modern radio frequency technology. The sensing detects parameters of a physical environment using radio waves, enabling environmental sensing functionality such as target positioning, motion recognition, and imaging. Traditional sensing and wireless communication exist independently, and such design leads to a waste of wireless spectrums and hardware resources. In the B5G and 6G eras, communication spectrums expand to millimeter waves, terahertz waves, and visible light communication. In the future, spectrums used for wireless communication may overlap with those traditionally used for sensing. The integrated sensing and communication technology merges two functionalities of the wireless communication and the sensing, and use the same signal to simultaneously fulfill two functionalities of communication and sensing, thereby improving spectrum utilization. Additionally, the wireless communication and wireless sensing share increasing similarities in aspects such as system design, signal processing, and data processing. Therefore, implementing the two functionalities of communication and sensing with the same device helps reduce equipment costs.

The integrated sensing and communication technology may be roughly divided into two categories: communication-assisted sensing and sensing-assisted communication. The communication-assisted sensing refers to transmission and aggregation of sensing information via the wireless communication. The communication-assisted sensing may expand breadth and depth of sensing services and improve the timeliness of the sensing services. Based on the integrated sensing and communication technology, efficient sensing services such as high-precision positioning, high-resolution imaging, and virtual environment reconstruction may be provided, thereby effectively constructing a digital twin environment, and enabling digital representation and in-depth processing across various industries.

In some sensing scenarios, sensing nodes perform sensing based on measurement results for transmission channels. Sensing accuracy is usually affected by factors such as signal density and signal duration.

The term "sensing" mentioned in the present disclosure refers to the procedure of directly or indirectly acquiring sensing information about a target or environment based on at least one type of sensing signals, such as sound waves, electromagnetic waves, and light waves (including but not limited to lasers). For example, by transmitting and receiving the sensing signals, and performing measurement or other forms of processing on the sensing signals, the sensing information about the target or environment may be acquired, which includes services such as positioning, ranging, speed measurement, angle measurement, target imaging, target detection, target tracking, and target recognition.

Currently, a common assumption for the use of wireless AI/machine learning (ML) is that models have been pre-trained and are ready for use, which results in relatively low requirements for datasets. However, it should be noted that engineering and implementing fully pre-trained models adaptable to different problems, scenarios, and environments is extremely challenging. It is difficult to develop a single wireless AI solution that is capable of addressing all these issues, nor is it feasible to pre-prepare various solutions for the wide range of wireless AI problems. In this context, the on-demand construction, deployment, and optimization of wireless AI solutions become particularly crucial.

To enable the on-demand construction, deployment, and optimization of wireless AI solutions, it is necessary to achieve on-demand acquisition of wireless datasets, especially the effective formation of datasets for specific wireless AI problems via online or offline means, to support the construction, deployment, and optimization of wireless AI solutions tailored to specific problems. Measurement and estimation results for transmission channels are a common type of AI datasets.

Both sensing and AI impose explicit requirements on accurate channel measurement/estimation. The accurate measurement/estimation includes at least two aspects: high-precision estimation of a single-point channel (accuracy); and estimation of a plurality of single points in a complete channel (extensiveness and large data volume).

In conventional communication systems, channel measurement is typically performed based on reference signals (RSs). The 5G system specifically designs channel state information reference signals (CSI-RSs), which is a dedicated measurement signal transmitted for channel measurement. In one aspect, to avoid excessively reducing system transmission efficiency, the density of the CSI-RSs is relatively low, which may not satisfy the precision requirements of the sensing and the AI. Further, in a case where a terminal needs to transmit large amounts of data, channel estimation still relies on the CSI-RSs, leading to a waste of transmission resources.

Demodulation reference information in data channels of existing systems may also be used for the channel measurement. Specifically, a data channel carries a demodulation reference signal (DMRS) r and data information y. The data information y undergoes processing (including encoding) to generate a transmit signal s. The reference signal is known to the receiver, but the receiver is unaware of the content of the data information y and the corresponding transmit signal s. The reference signal received by the receiver is R=r*Hr+n, and the data signal is S=s*Hs+n, wherein Hr represents a channel coefficient for the reference signal, Hs represents a channel coefficient for the data signal, and n represents additive noise. Since the receiver knows r, the receiver may estimate the channel coefficient Hr', and further estimate the channel coefficient Hs' corresponding to the data information based on Hr'. In summary, the error between an estimated channel coefficient Hs' and an actual channel coefficient Hs consists of two parts: the first part is an error between Hr' and Hr; and the second part is an error (relative to Hs) introduced in a case of calculating Hs' from Hr' based on algorithms (e.g., correlation, difference). Therefore, the channel measurement/estimation result acquired from demodulation signals of existing data channels may not satisfy the requirements of the sensing or AI on accurate channel measurement/estimation.

Foundation of the scheme (iterative channel measurement): The premise is consistent with the description of shortcomings in the related arts. The receiver performs channel estimation based on the reference signal r to acquire the channel coefficient Hr'. Further, upon compensation for the data channel based on Hr', the encoded data information s is acquired. The encoded data information s is decoded, and successful decoding yields the original data information y (0/1 bits to be transmitted). Successful decoding is a combined result from channel compensation based on Hr' and channel coding gain. In a case where the receiver processes the original data information y (e.g., including encoding) in the same manner as the transmitter to acquire s, that is, knowing the transmit signal accurately (where the data may be equivalent to the reference signal), the receiver may derive the channel coefficient Hs' corresponding to the data information based on S and s. S=s*Hs+n, and s represents the data information acquired by processing (including encoding) the original data information y. In other words, the error of the second part may be avoided, such that a more accurate channel measurement/estimation result is acquired. The method according to the present disclosure helps the receiver implement the iterative channel measurement.

FIG. 2 illustrates a flowchart of a method for wireless communication according to some embodiments of the present disclosure. The execution entity of each step in the method may be a first device. The method may include S210.

In S210, the first device transmits second information on a second channel upon correctly receiving first information, wherein the first information is encoded and carried on a first channel for transmission, and the second information is information related to the first channel.

The first device is the receiver of the first information, and the transmitter of the first information is referred to as a second device in the present disclosure. In some embodiments, in a case where a network device transmits the first information to a terminal device, the first device is the terminal device and the second device is the network device. In some embodiments, in a case where a terminal device transmits the first information to a network device, the first device is the network device and the second device is the terminal device.

The second device transmits the first information on the first channel, wherein the first information is encoded and carried on the first channel for transmission. In other words, the original information transmitted by the second device is the first information. In a case where the second device transmits the first information, the second device first encodes the first information to acquire the encoded first information, and then carries the encoded first information on the first channel for transmission.

The "first device correctly receiving the first information" means that the first device decodes the first information successfully. Upon compensating the first channel, the first device acquires the encoded first information. Decoding the encoded first information successfully yields the first information.

The first device transmits second information on a second channel upon correctly receiving first information, wherein the second information is information related to the first channel. In some embodiments, the second information is a measurement/estimation result for the first channel, e.g., used to indicate a coefficient of the first channel. Upon determining the second information, the first device may carry the second information on a second channel for transmission. The second channel is a channel used for transmitting the second information, and in the time domain, the second channel follows the first channel.

Taking the first information as original data information y and the first channel as a data channel as an example. The first device performs channel estimation based on the reference signal r to acquire the channel coefficient Hr'. Further, upon compensation for the data channel (equivalent to the first channel mentioned above) based on Hr', the encoded data information s is acquired. Decoding the encoded data information s successfully yields the original data information y. Successful decoding is a combined result from channel compensation based on Hr' and channel coding gain. In a case where the first device processes the original data information y (e.g., including encoding) in the same manner as the second device did during transmission to acquire s, that is, knowing the transmit signal accurately, the first device may derive the coefficient Hs' of the first channel (equivalent to the second information) based on S and s. S=s*Hs+n, and s represents the data information acquired by processing (including encoding) the original data information y. In this way, the error of the second part may be avoided, such that a more accurate channel measurement/estimation result is acquired.

In some embodiments, the first device transmits the second information to the second device on the second channel, i.e., the first device transmits information related to the first channel (e.g., a measurement/estimation result for the first channel) to the second device, such that the second device acquires the information related to the first channel.

In some embodiments, the second information is generated based on the first information.

In some embodiments, the first device acquires third information by processing the first information using a first encoding scheme, and generates the second information based on the third information. In some embodiments, the first device performs the same processing on the first information as the second device. That is, the processing performed by the second device on the first information during transmission is repeated by the first device upon correctly receiving the first information, to acquire the third information. The second information is then generated based on the third information. In some embodiments, the processing on the first information includes encoding. In some embodiments, the processing on the first information includes encoding and additional operations, e.g., modulation. In some embodiments, the encoding scheme used by the first device in encoding the first information is the same as that used by the second device (i.e., the first encoding scheme). In other words, the second device encodes the first information using the first encoding scheme prior to transmitting the first information to the first device. Upon successfully receiving the first information, the first device encodes the first information using the first encoding scheme to acquire the third information, and generates the second information based on the third information. Additionally, the first encoding scheme may be any encoding scheme, which is not limited in the present disclosure.

Still taking the first information as original data information y and the first channel as the data channel as an example. Upon decoding the original data information y successfully, the first device processes y (e.g., including encoding) in the same manner as the second device did during transmission to acquire s (equivalent to the third information), that is, knowing the transmit signal accurately. The first device may then derive the coefficient Hs' of the first channel (equivalent to the second information) from S and s.

In some embodiments, the second information includes: channel information corresponding to a physical resource occupied by the first information. The physical resource occupied by the first information refers to a resource used for transmitting the first information, which may include a resource in at least one of: time domain, frequency domain, spatial domain, or code domain. For example, the channel information corresponding to the physical resource occupied by the first information includes channel information for physical resources such as resource elements (REs), subcarriers, and symbols occupied by the first information.

In some embodiments, the second information includes a plurality of pieces of sub-information, and the physical resource occupied by the first information includes a plurality of physical resource elements, wherein each of the plurality of pieces of sub-information includes channel information corresponding to at least one of the plurality of physical resource elements. For example, the physical resource occupied by the first information is divided into a plurality of physical resource elements, and each of the plurality of pieces of sub-information is used to indicate channel information for a physical resource element, or for at least two physical resource elements. The approach enables flexible indication of channel information for different physical resource elements via different pieces of sub-information.

In some embodiments, the first information is data information, the first channel carries a reference signal, and the first channel further carries information acquired by encoding the data information. The first information being "data information" may be understood as the first information being original data information, the original data information is encoded to generate encoded data information, and the first channel carries both the reference signal and the encoded data information.

In some embodiments, in a case where the first information is data information and the first channel carries the reference signal and the encoded data information, the "channel information corresponding to the physical resource occupied by the first information" specifically refers to channel information corresponding to the physical resource occupied by the data information.

In some embodiments, the "encoding" includes but is not limited to at least one of: channel encoding, encoding implemented based on specific algorithms or models, or other processing schemes for processing original information and introducing additional information. An explanation of "encoding implemented based on specific algorithms or models" is provided hereinafter: Original information bits (e.g., the first information) are processed using a predefined algorithm or model to generate output bits (e.g., the encoded first information), wherein the number of output bits is greater than or equal to the number of original information bits. The algorithms or models may be AI-based algorithms/models or neural network-based algorithms/models. The neural networks include but are not limited to one or a combination of: a convolutional neural network, a recurrent neural network, a fully-connected neural network, a residual neural network, and a transformer neural network.

In some embodiments, the "channel encoding" includes but is not limited to at least one of: low-density parity-check (LDPC) encoding, Polar encoding, Turbo encoding, convolutional encoding, or Reed-Muller (RM) encoding.

The following section describes how to determine the first channel, i.e., how the first device determines whether any given channel qualifies as the first channel. In a case where a channel is the first channel, the first device transmits the second information on the second channel upon correctly receiving the first information carried on the first channel. In a case where a channel is not the first channel, the first device may skip determining and transmitting the second information.

In some embodiments, the first channel is a channel indicated by fourth information, wherein the fourth information is used to instruct acquisition of information related to the channel. For example, the first channel is dynamically indicated, for example, via the fourth information. In some embodiments, the first channel is a channel whose corresponding control information includes the fourth information, wherein the control information is used to indicate or schedule the channel.

In some embodiments, the fourth information is used to instruct acquisition of information related to the channel. Specifically, the fourth information explicitly instructs acquisition of information related to the channel; or the fourth information implicitly instructs acquisition of information related to the channel.

In some embodiments, for any channel (referred to as channel A for convenience), the control information used to indicate (or schedule) channel A includes the fourth information. In a case where the fourth information takes a preset value, channel A is identified as the first channel.

In some embodiments, the fourth information is 1-bit information. In a case where the bit is set to a first value, channel A serves as the first channel. In a case where the bit is set to a second value, channel A is not used for acquiring information related to the channel. The first value and the second value are different. For example, the first value is 1 and the second value is 0, or the first value is 0 and the second value is 1.

In some embodiments, the fourth information consists of M bits, corresponding to 2^{M} indication results (where M is a positive integer). Taking Table 1 as an example, "00" indicates that is not used for acquiring information related to the channel A, and "01," "10," and "11" indicate resources used by the second channel and implicitly identify channel A as the first channel.

**Table 1**

| Fourth information | Indication results |
|---|---|
| 00 | Indicating that is not used for acquiring information related to the channel A |
| 01 | Channel resource 1 |
| 10 | Channel resource 2 |
| 11 | Channel resource 3 |

In some embodiments, the first channel is an available channel within each period determined based on a periodic parameter. In some embodiments, the first channel is the first available channel within each period determined based on a periodic parameter.

In some embodiments, the available channel satisfies at least one of: a channel for actual transmission, a channel configured and not discarded or canceled, or a channel satisfying a specific condition.

In some embodiments, the channel satisfying a specific condition includes one of: a downlink data channel, an uplink data channel, a physical downlink shared channel (PDSCH), a semi-persistently scheduled PDSCH, a physical uplink shared channel (PUSCH), a configured grant PUSCH, a channel with priority meeting a condition, and a channel with a transmission bandwidth greater than or equal to a first threshold. The conditions that the priority needs to satisfy and the first threshold may be predefined or configured, which is not limited in the present disclosure.

In some embodiments, the available channel within the each period is: an available channel with all time-domain resources falling within the period and with an earliest start position in a time domain; or an available channel with all time-domain resources falling within the period and with an earliest end position in a time domain. As illustrated in FIG. 3, the periodic parameter is P, and two periods are determined based on the periodic parameter. The first available channel in the first period is PDSCH 1, and the first available channel in the second period is PDSCH 4.

The following describes the transmission of the second channel (the second information).

In some embodiments, the first device transmits, on a third channel, acknowledgment information corresponding to the first information or acknowledgment information corresponding to the first channel, wherein the third channel is transmitted no later than the second channel in a time domain. Upon correctly receiving the first information, the first device transmits the acknowledgment information corresponding to the first information or the acknowledgment information corresponding to the first channel on the third channel, wherein the acknowledgment information is used to indicate that the first device has correctly received the first information. In some embodiments, the acknowledgment information represented by acknowledgment (ACK). This scenario applies in a case where the first channel is a data channel, such as a downlink data channel or an uplink data channel. For example, the first channel is a PDSCH or PUSCH. In addition, in some embodiments, in a case where the first device fails to correctly receive the first information, the first device does not transmit the second channel or the second channel carries invalid information.

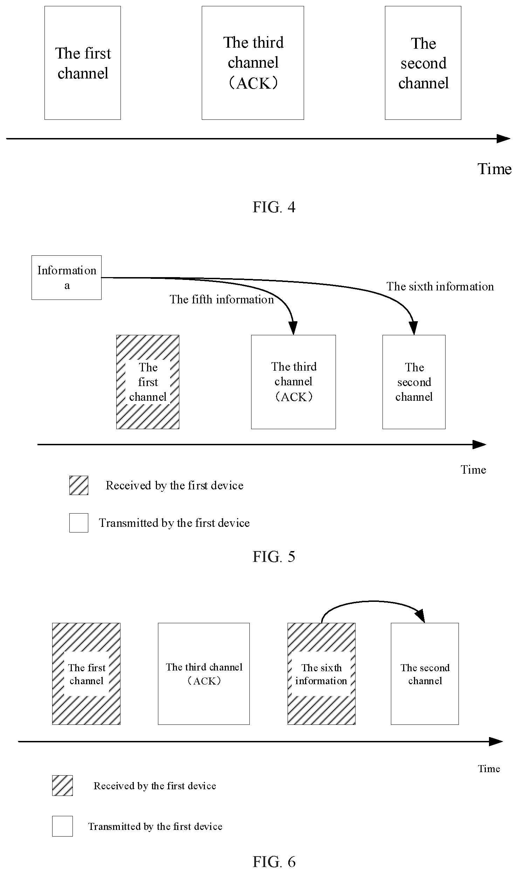

FIG. 4 illustrates a time-domain timing diagram of a first channel, a second channel, and a third channel. Upon correctly receiving the first information transmitted on the first channel, the first device transmits the acknowledgment information corresponding to the first information or the acknowledgment information corresponding to the first channel on the third channel, and transmits the second information on the second channel. The third channel is transmitted not later than the second channel in the time domain. That is, the second channel is transmitted not earlier than the third channel in the time domain.

In this way, the first device transmits the second information only upon transmitting the acknowledgment information corresponding to the first information or the acknowledgment information corresponding to the first channel, such that the transmission reliability of the second information is improved, higher system resource utilization is achieved, and the second device is prevented from performing blind detection on the second information. The reason is that the first device transmits the acknowledgment information first and then the second information. Therefore, the second device detects the second information only upon receiving the acknowledgment information, such that the second device is prevented from performing blind detection on the second information.

In some embodiments, a physical resource occupied by the third channel (the acknowledgment information) includes a resource in at least one of: time domain, frequency domain, space domain, or code domain. Each dimension may be further divided into a plurality of granularities. In one implementation, determining the frequency-domain resource includes determining a carrier or a serving cell, and then determining frequency-domain resource elements within the carrier or the serving cell. In another implementation, determining the time-domain resource includes determining a slot or a subframe, and then determining symbols within the slot or the subframe. In another implementation, determining the code-domain resource includes determining a base sequence, and then determining a sequence generated based on the base sequence.

In some embodiments, the physical resource occupied by the third channel is indicated by fifth information. In some embodiments, the fifth information is any one of: physical layer signaling, downlink control signaling, uplink control signaling, higher-layer signaling, radio resource control (RRC) signaling, or medium access control (MAC) signaling.

In some embodiments, the fifth information may be information transmitted by the first device, for example, information transmitted by the first device to the second device; or the fifth information may be information received by the first device, for example, information transmitted by the second device to the first device. For example, in a case where the first device is a network device and the second device is a terminal device, the fifth information is information transmitted by the first device (i.e., the network device) to the second device (i.e., the terminal device). For example, in a case where the first device is a terminal device and the second device is a network device, the fifth information is information transmitted by the second device (i.e., the network device) to the first device (i.e., the terminal device).

In some embodiments, the physical resource occupied by the third channel is determined according to the physical resource occupied by the first channel. In some embodiments, a first predetermined offset is present between the physical resource occupied by the third channel in the time domain and the physical resource occupied by the first channel in the time domain. The first predetermined offset may be predefined or pre-configured, which is not limited in the present disclosure. For example, a first predetermined offset is present between a start position in the time domain of the third channel and a start position in the time domain (or an end position in the time domain, or the time-domain unit for the first channel, or the start position of the time unit for the first channel, or the end position of the time unit for the first channel) of the first channel.

In some embodiments, the physical resource occupied by the second channel (the second information) includes a resource in at least one of: time domain, frequency domain, space domain, or code domain. Each dimension may be further divided into a plurality of granularities. In one implementation, determining the frequency-domain resource includes determining a carrier or a serving cell, and then determining frequency-domain resource elements within the carrier or the serving cell. In another implementation, determining the time-domain resource includes determining a slot or a subframe, and then determining symbols within the slot or the subframe. In another implementation, determining code-domain resource includes determining a base sequence, and then determining a sequence generated based on the base sequence.

In some embodiments, the physical resource occupied by the second channel is indicated by sixth information. In some embodiments, the sixth information is any one of: physical layer signaling, downlink control signaling, uplink control signaling, higher-layer signaling, RRC signaling, or MAC signaling.

In some embodiments, the sixth information may be information transmitted by the first device, for example, information transmitted from the first device to the second device; or the sixth information may be information received by the first device, for example, information transmitted from the second device to the first device. For example, in a case where the first device is a network device and the second device is a terminal device, the sixth information is information transmitted by the first device (i.e., the network device) to the second device (i.e., the terminal device). For example, in a case where the first device is a terminal device and the second device is a network device, the sixth information is information transmitted by the second device (i.e., the network device) to the first device (i.e., the terminal device).

In some embodiments, the physical resource occupied by the second channel is determined based on the physical resource occupied by the first channel or the third channel. In some embodiments, a second predetermined offset is present between the physical resource occupied by the second channel in the time domain and the physical resource occupied by the first channel or the third channel in the time domain. The second predetermined offset may be predefined orpre- configured, which is not limited in the present disclosure. For example, a second predetermined offset is present between a start position in the time domain of the second channel and the start position in the time domain (or an end position in the time domain, or the time-domain unit for the first channel or the third channel, or the start position of the time unit for the first channel or the third channel, or the end position of the time unit for the first channel or the third channel) of the first channel or the third channel.

In some embodiments, the fifth information and the sixth information are transmitted simultaneously. For example, the fifth information and the sixth information are included in downlink control signaling or higher-layer signaling at the same time. As illustrated in FIG. 5, information a includes the fifth information and the sixth information, wherein the fifth information is used to indicate the physical resource occupied by the third channel, and the sixth information is used to indicate the physical resource occupied by the second channel. In some embodiments, information a may further include configuration parameters of the first channel. The approach helps save signaling overhead and reduce processing latency. In some embodiments, in a case where the feedback information transmitted by the first device for the first information or the first channel is negative acknowledgement (NACK), the physical resource occupied by the second channel is released, which is conducive to improving resource utilization.

In some embodiments, the sixth information is transmitted independently.

In one possible scenario, the sixth information is transmitted independently because the entities responsible for configuring the fifth information and the sixth information are different. For example, the sixth information is transmitted from the first device to the second device, and the fifth information is transmitted from the second device to the first device, or the sixth information is transmitted from the second device to the first device, and the fifth information is transmitted from the first device to the second device.

In another possible scenario, the sixth information is transmitted independently because the fifth information and the sixth information are transmitted via different types of signaling. For example, the sixth information is transmitted via higher-layer signaling, and the fifth information is transmitted via control signaling, or the sixth information is transmitted via control signaling, and the fifth information is transmitted via higher-layer signaling.

In some embodiments, the sixth information is transmitted by the second device to the first device in response to the transmission of the acknowledgment information, and the second device is a device transmitting the first information. As illustrated in FIG. 6, upon receiving the acknowledgment information corresponding to the first information or the acknowledgment information corresponding to the first channel, the second device transmits the sixth information to indicate the physical resource occupied by the second channel. In this way, the second device configures the transmission resources for the second channel only upon confirming the necessity of transmitting the second information, which helps improve transmission efficiency.

In some embodiments, an interval between an end position in the time domain of the sixth information and a start position in the time domain of the second channel is greater than or equal to a second threshold. In other words, the start position in the time domain of the second channel is not earlier than the sum of the end position in the time domain of the sixth information and the second threshold. The second threshold may be predefined or pre-configured, which is not limited in the present disclosure. The approach reserves sufficient processing time for the first device to transmit the second information.

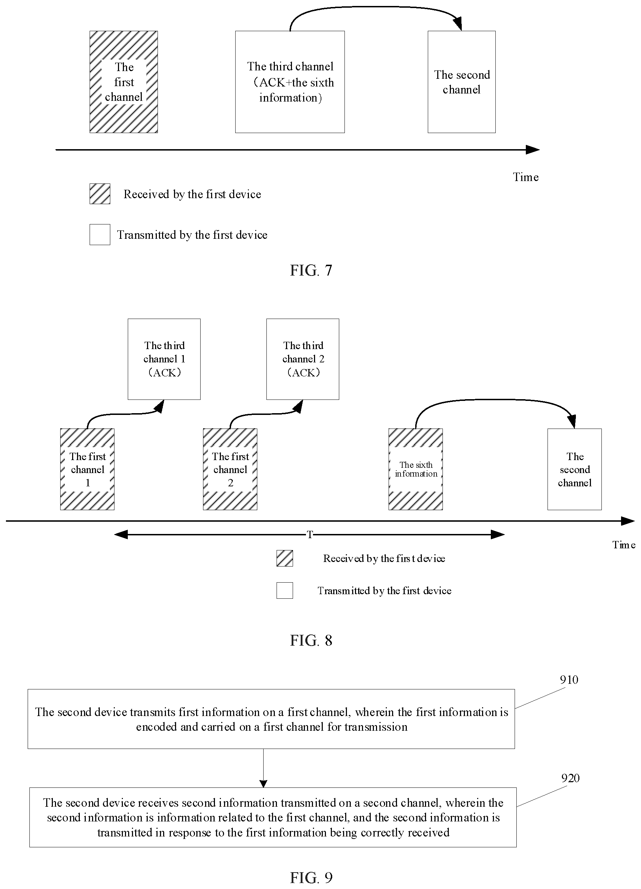

In some embodiments, the first device transmits the acknowledgment information and the sixth information simultaneously. As illustrated in FIG. 7, upon correctly receiving the first information transmitted on the first channel, the first device transmits the acknowledgment information corresponding to the first information or the acknowledgment information corresponding to the first channel on the third channel, and transmits the sixth information on the third channel. The sixth information is used to indicate the transmission resources occupied by the second channel. The method enables the first device to configure the transmission resources for the second channel only upon confirming the necessity of transmitting the second information, which helps improve transmission efficiency. Additionally, transmitting the acknowledgment information and the sixth information simultaneously helps reduce latency.

In some embodiments, upon correctly receiving the first information, the first device transmits the second information, but does not transmit the acknowledgment information corresponding to the first information or the acknowledgment information corresponding to the first channel. This scenario applies in a case where the first channel is a control channel or a broadcast channel. For example, the first channel is a physical downlink control channel (PDCCH), a physical uplink control channel (PUCCH), or a physical broadcast channel (PBCH). In addition, in some embodiments, in a case where the first device fails to correctly receive the first information, the first device does not transmit the second channel or the second channel carries invalid information. The approach may be applied to broadcast and multicast channels, i.e., the approach supports using more channels for channel measurement, improves flexibility, and is beneficial for improving system efficiency.

In some embodiments, the physical resource occupied by the second channel (the second information) includes a resource in at least one of: time domain, frequency domain, space domain, or code domain. Each dimension may be further divided into a plurality of granularities. In one implementation, determining the frequency-domain resource includes identifying a carrier or a serving cell, and then determining frequency-domain resource elements within the carrier or the serving cell. In another implementation, determining the time-domain resource includes identifying a slot or a subframe, and then determining symbols within the slot or the subframe. In another implementation, determining the code-domain resource includes identifying a base sequence, and then determining a sequence generated based on the base sequence.

In some embodiments, the physical resource occupied by the second channel is indicated by fourth information, wherein the fourth information is used to indicate the first channel. In other words, indicating the relevant configuration information of both the first channel and the second channel using the same signaling (i.e., the fourth information) helps save signaling overhead. In some embodiments, the fourth information is any one of: physical layer signaling, downlink control signaling, uplink control signaling, higher-layer signaling, RRC signaling, or MAC signaling.

In some embodiments, the physical resource occupied by the second channel is indicated by the sixth information. In some embodiments, the sixth information is any one of: physical layer signaling, downlink control signaling, uplink control signaling, higher-layer signaling, RRC signaling, or MAC signaling. In some embodiments, the sixth information is transmitted independently. In some embodiments, the sixth information may be information transmitted by the first device, for example, information transmitted from the first device to the second device; or the sixth information may be information received by the first device, for example, information transmitted from the second device to the first device. For example, in a case where the first device is a network device and the second device is a terminal device, the sixth information is information transmitted by the first device (i.e., the network device) to the second device (i.e., the terminal device). For example, in a case where the first device is a terminal device and the second device is a network device, the sixth information is information transmitted by the second device (i.e., the network device) to the first device (i.e., the terminal device).

In some embodiments, in a case where the first channel is the PDCCH, the physical resource occupied by the second channel is indicated by downlink control information (DCI) in the PDCCH. In a case where the first channel is the PBCH, the physical resource occupied by the second channel is configured via higher-layer signaling. In a case where the first channel is the PUCCH, the physical resource occupied by the second channel is indicated by the DCI or higher-layer signaling that indicates the PUCCH, or by uplink control information (UCI) carried on the PUCCH.

In some embodiments, the physical resource occupied by the second channel is determined based on the physical resource occupied by the first channel. In some embodiments, a second predetermined offset is present between the physical resource occupied by the second channel in the time domain and the physical resource occupied by the first channel in the time domain. The second predetermined offset may be predefined or pre-configured, which is not limited in the present disclosure. For example, a second predetermined offset is present between the start position in the time domain of the second channel and the start position in the time domain (or the end position in the time domain, or the time-domain unit for the first channel, or the start position of the time unit for the first channel, or the end position of the time unit for the first channel) of the first channel.

In some embodiments, the sixth information includes the identification information of the first channel. The identification information of the first channel is used to indicate the first channel.

For example, in a case where a plurality of first channels are present, the sixth information includes the identification information of the first channel to identify which first channel(s) the channel information carried by the second channel corresponds to. As illustrated in FIG. 8, there are two first channels, denoted as first channel 1 and first channel 2. In a case where the sixth information includes the identification information of first channel 1, the sixth information instructs the first device to determine and transmit the second information corresponding to first channel 1. In a case where the sixth information includes the identification information of first channel 2, the sixth information instructs the first device to determine and transmit the second information corresponding to first channel 2. In a case where the sixth information includes the identification information of both first channel 1 and first channel 2, the sixth information instructs the first device to determine and transmit the second information corresponding to first channel 1 and the second information corresponding to first channel 2. The approach enables flexible configuration of the channel information to be fed back as needed.

In some embodiments, the transmission position of the sixth information in the time domain or the second channel (i.e., the indication result of the sixth information) has certain time constraints. Taking FIG. 8 as an example, within a time period T starting from the start position in the time domain or the end position in the time domain of first channel 1 (or third channel 1, wherein third channel 1 is used to transmit the acknowledgment information corresponding to first channel 1), the sixth information may instruct the transmission of the second information corresponding to first channel 1. In a case where the time period expires, there is no need to cache the second information corresponding to first channel 1 any longer. The method may prevent the first device from caching a large amount of channel information for a long time.

The following describes application examples of the technical solution according to the present disclosure in some specific scenarios.

Scenario 1: Taking the first device being a terminal device and the second device being a network device as an example. The first channel in the above embodiments is a downlink data channel (e.g., the PDSCH), the third channel is a first uplink channel, and the second channel is a second uplink channel.

The network device transmits downlink control information (e.g., the DCI) to indicate the transmission of the downlink data channel (e.g., the PDSCH). The downlink control information simultaneously indicates the first uplink channel and the second uplink channel. The first uplink channel (e.g., the PUCCH) is used to transmit feedback information corresponding to the downlink data channel.

In a case where the terminal device correctly decodes the downlink data channel, i.e., the feedback information is ACK, the terminal device transmits channel information via the second uplink channel (e.g., the PUCCH or the PUSCH), wherein the channel information is generated based on the downlink data channel, and the channel information corresponds to the second information in the above embodiments and is used to indicate the channel information corresponding to the downlink data channel.

In a case where the terminal device fails to correctly decode the downlink data channel, the terminal device does not transmit the second uplink channel.

Scenario 2: Taking the first device being a terminal device and the second device being a network device as an example. The first channel in the above embodiments is a downlink data channel (dynamically scheduled or semi-persistently scheduled PDSCH), the third channel is a first uplink channel, and the second channel is a second uplink channel.

The terminal device correctly receives the downlink data channel (dynamically scheduled or semi-persistently scheduled PDSCH), i.e., the decoding is successful, and the terminal device transmits feedback information via the first uplink channel. Within a time period T starting from the start position or end position of the downlink data channel or the first uplink channel, the terminal device detects (which does not mean it is definitely received) the sixth information (e.g., downlink control signaling), wherein the sixth information is used to instruct the terminal device to use the second uplink channel to transmit channel information generated based on the downlink data channel. The channel information corresponds to the second information in the above embodiments.

Scenario 3: Taking the first device being a terminal device and the second device being a network device as an example. The first channel in the above embodiments is a downlink channel (e.g., the PBCH), and the second channel is a second uplink channel.

The terminal device receives the downlink channel (e.g., the PBCH). The terminal device receives the sixth information (e.g., downlink control signaling or RRC signaling) transmitted by the network device to indicate the second uplink channel.

In a case where the terminal device correctly decodes the information in the downlink channel, the terminal device transmits channel information via the second uplink channel (e.g., the PUCCH or the PUSCH), wherein the channel information is generated based on the downlink channel. The channel information corresponds to the second information in the above embodiments.

In a case where the terminal device fails to correctly decode the information in the downlink channel, the terminal device does not transmit the second uplink channel.

Scenario 4: Taking the first device being a network device and the second device being a terminal device as an example. The first channel is an uplink data channel (e.g., the PUSCH), and the second channel is a downlink channel.

The network device transmits downlink control information (e.g., the DCI) to indicate the transmission of the uplink data channel (e.g., the PUSCH). The downlink control information simultaneously indicates a downlink channel, which is used to transmit channel information generated based on the uplink data channel. The channel information corresponds to the second information in the above embodiments.

The technical solution provided in the embodiments of the present disclosure enables the first device to generate and transmit the second information upon correctly receiving the first information transmitted on the first channel, wherein the second information is related to the first channel, thereby allowing the first device to implement iterative channel measurement and improving the accuracy of channel measurement/estimation.

FIG.9 illustrates a flowchart of a method for wireless communication according to some embodiments of the present disclosure. Each step of the method is performed by a second device. The method may include at least one of S910 to S920.

In S910, the second device transmits first information on a first channel, wherein the first information is encoded and carried on a first channel for transmission.

In S920, the second device receives second information transmitted on a second channel, wherein the second information is information related to the first channel, and the second information is transmitted in response to the first information being correctly received.

For details not described in detail in the embodiment, reference may be made to the above embodiments.

The following are apparatus embodiments of the present disclosure. For details not described in detail in the apparatus embodiments, reference may be made to the corresponding descriptions in the above method embodiments.

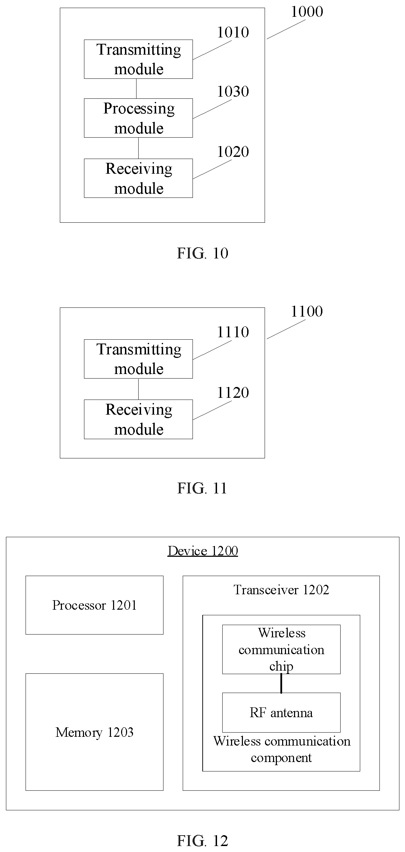

FIG. 10 illustrates a block diagram of an apparatus for wireless communication according to some embodiments of the present disclosure. The apparatus has the function of realizing the above method for wireless communication. The functions may be implemented by hardware or by running the corresponding software on hardware. The device may be the first device previously described or integrated within the first device. The first device may be a terminal device or a network device. As illustrated in FIG. 10, the apparatus 1000 may include: a transmitting module 1010.

The transmitting module 1010 is configured to transmit second information on a second channel upon correctly receiving first information, wherein the first information is encoded and carried on a first channel for transmission, and the second information is information related to the first channel.

In some embodiments, as illustrated in FIG. 10, the apparatus 1000 may further include: a receiving module 1020, configured to receive the first information.

In some embodiments, the second information is generated based on the first information.

In some embodiments, as illustrated in FIG. 10, the apparatus 1000 may further include: a processing module 1030, configured to acquire third information by processing the first information using a first encoding scheme, and generate the second information based on the third information.

In some embodiments, the first information is processed by a second device using the first encoding scheme and is transmitted to the first device.

In some embodiments, the second information includes channel information corresponding to a physical resource occupied by the first information.

In some embodiments, the second information includes a plurality of pieces of sub-information, and the physical resource occupied by the first information includes a plurality of physical resource elements, wherein each of the plurality of pieces of sub-information includes channel information corresponding to at least one of the plurality of physical resource elements.

In some embodiments, the first information is data information, the first channel carries a reference signal, and the first channel further carries information acquired by encoding the data information.

In some embodiments, the first channel is a channel indicated by fourth information, or the first channel is an available channel within each period, wherein the available channel is determined based on a periodic parameter.

In some embodiments, the available channel satisfies at least one of: a channel for actual transmission; a channel configured and not discarded or canceled; or a channel satisfying a specific condition, wherein the channel satisfying a specific condition includes one of: a downlink data channel, an uplink data channel, a PDSCH, a semi-persistently scheduled PDSCH, a PUSCH, a configured grant PUSCH, a channel with priority meeting a condition, and a channel with a transmission bandwidth greater than or equal to a first threshold.

In some embodiments, the available channel within the each period is: an available channel with all time-domain resources falling within the period and with an earliest start position in a time domain; or an available channel with all time-domain resources falling within the period and with an earliest end position in a time domain.

In some embodiments, the transmitting module 1010 is further configured to transmit, on a third channel, acknowledgment information corresponding to the first information or acknowledgment information corresponding to the first channel, wherein the third channel is transmitted no later than the second channel in a time domain.

In some embodiments, a physical resource occupied by the third channel is indicated by fifth information; or is determined based on a physical resource occupied by the first channel.

In some embodiments, a physical resource occupied by the second channel is indicated by sixth information; or is determined based on a physical resource occupied by the first channel or the third channel.

In some embodiments, the sixth information is transmitted by a second device to the first device in response to the acknowledgment information, and the second device is a device transmitting the first information.

In some embodiments, an interval between an end position in the time domain of the sixth information and a start position in the time domain of the second channel is greater than or equal to a second threshold.

In some embodiments, the first device transmits the acknowledgment information and the sixth information simultaneously.

In some embodiments, a physical resource occupied by the second channel is indicated by fourth information, wherein the fourth information is used to indicate the first channel; or a physical resource occupied by the second channel is indicated by sixth information; or a physical resource occupied by the second channel is determined based on a physical resource occupied by the first channel.

In some embodiments, the sixth information includes identification information of the first channel.

In some embodiments, in a case where the first information is not correctly received, the first device does not transmit the second channel or the second channel carries invalid information.

In some embodiments, the encoding includes at least one of: channel encoding; encoding implemented based on a predefined algorithm or model; or other processing schemes for processing original information and introducing additional information.

In some embodiments, the channel encoding includes at least one of: LDPC encoding, Polar encoding, Turbo encoding, convolutional encoding, or RM encoding.

FIG. 11 illustrates a block diagram of an apparatus for wireless communication according to some embodiments of the present disclosure. The apparatus has the function of realizing the above method for wireless communication. The functions may be implemented by hardware or by running the corresponding software on hardware. The device may be the second device previously described or integrated within the second device. The second device may be a terminal device or a network device. As illustrated in FIG. 11, the apparatus 1100 may include a transmitting module 1110 and a receiving module 1120.

The transmitting module 1110 is configured to transmit first information on a first channel, wherein the first information is encoded and carried on a first channel for transmission.

The receiving module 1120 is configured to receive second information transmitted on a second channel, wherein the second information is information related to the first channel, and the second information is transmitted in response to the first information being correctly received.

In some embodiments, the second information is generated based on the first information.

In some embodiments, the second information is generated based on third information, wherein the third information is acquired by a first device processing the first information using a first encoding scheme.

In some embodiments, the first information is processed by the second device using the first encoding scheme and is transmitted to the first device.

In some embodiments, the second information includes channel information corresponding to a physical resource occupied by the first information.

In some embodiments, the second information includes a plurality of pieces of sub-information, and the physical resource occupied by the first information includes a plurality of physical resource elements, wherein each of the plurality of pieces of sub-information includes channel information corresponding to at least one of the plurality of physical resource elements.

In some embodiments, the first information is data information, the first channel carries a reference signal, and the first channel further carries information acquired by encoding the data information.

In some embodiments, the first channel is a channel indicated by fourth information, or the first channel is an available channel within each period, wherein the available channel is determined based on a periodic parameter.

In some embodiments, the available channel satisfies at least one of: a channel for actual transmission; a channel configured and not discarded or canceled; or a channel satisfying a specific condition, wherein the channel satisfying a specific condition includes one of: a downlink data channel, an uplink data channel, a PDSCH, a semi-persistently scheduled PDSCH, a PUSCH, a configured grant PUSCH, a channel with priority meeting a condition, and a channel with a transmission bandwidth greater than or equal to a first threshold.

In some embodiments, the available channel within the each period is: an available channel with all time-domain resources falling within the period and with an earliest start position in a time domain; or an available channel with all time-domain resources falling within the period and with an earliest end position in a time domain.

In some embodiments, the receiving module 1120 is further configured to receive, on a third channel, acknowledgment information corresponding to the first information or acknowledgment information corresponding to the first channel transmitted, wherein the third channel is transmitted no later than the second channel in a time domain.

In some embodiments, a physical resource occupied by the third channel is indicated by fifth information; or is determined based on a physical resource occupied by the first channel.

In some embodiments, a physical resource occupied by the second channel is indicated by sixth information; or is determined based on a physical resource occupied by the first channel or the third channel.

In some embodiments, the sixth information is transmitted by a second device to the first device in response to the acknowledgment information, and the second device is a device transmitting the first information.

In some embodiments, an interval between an end position in the time domain of the sixth information and a start position in the time domain of the second channel is greater than or equal to a second threshold.

In some embodiments, the first device transmits the acknowledgment information and the sixth information simultaneously.

In some embodiments, a physical resource occupied by the second channel is indicated by fourth information, wherein the fourth information is used to indicate the first channel; or a physical resource occupied by the second channel is indicated by sixth information; or a physical resource occupied by the second channel is determined based on a physical resource occupied by the first channel.

In some embodiments, the sixth information includes identification information of the first channel.

In some embodiments, in a case where the first information is not correctly received, the first device does not transmit the second channel or the second channel carries invalid information.

In some embodiments, the encoding includes at least one of: channel encoding; encoding implemented based on a predefined algorithm or model; or other processing schemes for processing original information and introducing additional information.

In some embodiments, the channel encoding includes at least one of: LDPC encoding, Polar encoding, Turbo encoding, convolutional encoding, or RM encoding.

It should be noted that the device according to the above embodiments implements its functions by merely illustrating the division of each functional module. In practical applications, the aforementioned functions may be assigned to different functional modules as needed. That is, the device may be divided into different functional modules to implement all or part of the functions as described above.

As for the apparatus in the above embodiments, the specific way in which each module performs the operations has been described in detail in the embodiments of the method, which is not described herein any further. For details not described in the apparatus embodiments, reference may be made to the above method embodiments.

FIG. 12 is a schematic structural diagram of a device according to some embodiments of the present disclosure. The device may be the first device mentioned above, or the second device mentioned above. Both the first device and the second device may be a terminal device or a network device. The device 1200 includes a processor 1201, a transceiver 1202, and a memory 1203. The processor 1201 is configured to implement various processing functions of the device 1200, for example, generating information to be transmitted, processing received information, controlling transmission and/or reception, and performing the functions of the processing module. The transceiver 1202 is configured to implement transmission and/or reception functions, for example, implementing the functions of the transmitting module and/or receiving module.

The processor 1201 includes one or more processing cores, and the processor 1201 performs various functional applications and information processing by running software programs and modules.

The transceiver 1202 may include a receiver and a transmitter. For example, the receiver and transmitter may be implemented as a single wireless communication component. The single wireless communication component may include a wireless communication chip and an RF antenna.

The memory 1203 may be communicably connected to the processor 1201 and the transceiver 1202.

The memory 1203 is configured to store one or more computer programs runable by a processor, and processor 1201 is configured to run the one or more computer programs to implement various steps of the above method embodiments.

In some embodiments, the device 1200 is the first device, and the transceiver 1202 is configured to transmit second information on a second channel upon correctly receiving first information, wherein the first information is encoded and carried on a first channel for transmission, and the second information is information related to the first channel.

In some embodiments, the device 1200 is the second device, and the transceiver 1202 is configured to transmit first information on a first channel, wherein the first information is encoded and carried on a first channel for transmission; and the transceiver 1202 is further configured to receive second information transmitted on a second channel, wherein the second information is information related to the first channel, and the second information is transmitted in response to the first information being correctly received.

For the details not detailed in this embodiment, reference may be made to the embodiments above, which are not elaborated herein.

Furthermore, the memory may be implemented using any type of volatile or non-volatile storage devices or combinations thereof. Volatile or non-volatile storage devices include, but are not limited to: a magnetic disk or optical disk, an electrically erasable programmable read-only memory (EEPROM), an erasable programmable read-only memory (EPROM), a static random-access memory (SRAM), a read-only memory (ROM), a magnetic memory, a flash memory, and a programmable read-only memory (PROM).

Some embodiments of the present disclosure further provide a computer-readable storage medium, storing one or more executable instructions. The one or more executable instructions, when loaded and executed by a processor, cause the processor to perform the method for wireless communication at the first device, or the method for wireless communication at the second device. In some embodiments, the computer-readable storage medium may include a ROM, a RAM, a solid state drive (SSD) or an optical disc. The random-access memory may include a resistance RAM (ReRAM) and a dynamic RAM (DRAM).

Some embodiments of the present disclosure further provide a chip. The chip includes programmable logical circuitry or one or more programs. The chip, when running, causes a terminal equipped with the chip to perform the method for wireless communication at the first device, or the method for wireless communication at the second device.

Some embodiments of the present disclosure further provide a computer program product or computer program. The computer program product or computer program includes one or more computer instructions stored in a computer-readable storage medium. The one or more computer instructions, when loaded and executed by a processor of a computer device, cause the computer device to perform the method for wireless communication at the first device, or the method for wireless communication at the second device.

It should be understood that the term "indication" mentioned in the embodiments of this application may refer to direct indication, indirect indication, or an expression of a relationship. Illustratively, when A indicates B, it may mean that A directly indicates B (e.g., B being obtainable via A), or A indirectly indicates B (e.g., A indicating C via which B is obtained), or it may indicate an inherent relationship between A and B.

In the description of the embodiments of this application, the term "correspondence" may indicate a direct or indirect relationship between the two, may also denote an associative relationship, or may refer to relationships such as indication and being indicated, configuration and being configured, etc. In some embodiments,

In some embodiments of the present disclosure, the term "predetermined" may be implemented by pre-storing a corresponding code, a corresponding table, or another method that may be used to indicate relevant information in a device (such as a terminal device and a network device), and the specific implementation thereof is not limited in the present disclosure. For example, the term "predefined" may be "defined" in a protocol.

In some embodiments of the present disclosure, the term "protocol" may be a standard protocol in the field of communication, and for example, may include a BTE protocol, a Wi-Fi protocol, and a related protocol applicable to a future communication system, which is not limited in the present disclosure.

In this paper, the term "a plurality of" refers to two or more. The term "and/or" describes the association relationship between related objects, indicating that three types of relationships may exist. For example, the phrase "A and/or B" means (A), (B), or (A and B). The character "/" generally indicates that the associated objects are in an "or" relationship.

The expression "greater than or equal to" herein means greater than or equal to or just greater than, and the expression "less than or equal to" herein means less than or equal to or just less than.

The step numbers described in this article are merely illustrative of one possible execution sequence between steps. In some other embodiments, the steps may also be performed in a non-numbered order. For example, two steps with different numbers are performed simultaneously or in the reverse order of the illustrated sequence, which is not limited in the present disclosure.

Those skilled in the art of homo sapiens should be able to consciousness that in one or more of the above examples, the functions described in the embodiments of this application may be implemented in hardware, software, firmware, or any combination thereof. When implemented in software, these functions may be stored on a computer-readable medium or transmitted as one or more instructions or codes on the computer-readable medium. Computer-readable media include both computer storage media and communication media, where communication media includes any medium that facilitates the transfer of computer programs from one location to another. Storage media may be any available medium that may be accessed by a general-purpose or special-purpose computer.

Described above are merely optional embodiments of the present disclosure and are not intended to limit the present disclosure. Any modifications, equivalent replacements, improvements, and the like made within the spirit and principle of the present disclosure shall fall within the protection scope of the present disclosure.

## Claims

1. A method for wireless communication, performed by a first device, the method comprising:
transmitting second information on a second channel upon correctly receiving first information, wherein the first information is encoded and carried on a first channel for transmission, and the second information is information related to the first channel.

2. The method according to claim 1, wherein the second information is generated based on the first information.

3. The method according to claim 2, further comprising:
acquiring third information by processing the first information using a first encoding scheme, wherein the first information is processed by a second device and is transmitted to the first device; and
generating the second information based on the third information.

4. The method according to any one of claims 1 to 3, wherein the second information comprises channel information corresponding to a physical resource occupied by the first information.

5. The method according to claim 4, wherein the second information comprises a plurality of pieces of sub-information, and the physical resource occupied by the first information comprises a plurality of physical resource elements, wherein each of the plurality of pieces of sub-information comprises channel information corresponding to at least one of the plurality of physical resource elements.

6. The method according to any one of claims 1 to 5, wherein the first information is data information, the first channel carries a reference signal, and the first channel further carries information acquired by encoding the data information.

7. The method according to any one of claims 1 to 6, wherein the first channel is a channel indicated by fourth information, or the first channel is an available channel within each period, wherein the available channel is determined based on a periodic parameter.

8. The method according to claim 7, wherein the available channel satisfies at least one of:
a channel for actual transmission;
a channel configured and not discarded or canceled; or
a channel satisfying a specific condition, wherein the channel satisfying a specific condition comprises one of: a downlink data channel, an uplink data channel, a physical downlink shared channel (PDSCH), a semi-persistently scheduled PDSCH, a physical uplink shared channel (PUSCH), a configured grant PUSCH, a channel with priority meeting a condition, and a channel with a transmission bandwidth greater than or equal to a first threshold.

9. The method according to claim 7 or 8, wherein the available channel within the each period is:
an available channel with all time-domain resources falling within the period and with an earliest start position in a time domain; or
an available channel with all time-domain resources falling within the period and with an earliest end position in a time domain.

10. The method according to any one of claims 1 to 9, further comprising:
transmitting, on a third channel, acknowledgment information corresponding to the first information or acknowledgment information corresponding to the first channel, wherein the third channel is transmitted no later than the second channel in a time domain.

11. The method according to claim 10, wherein
a physical resource occupied by the third channel is indicated by fifth information; or
a physical resource occupied by the third channel is determined based on a physical resource occupied by the first channel.

12. The method according to claim 10 or 11, wherein
a physical resource occupied by the second channel is indicated by sixth information; or
a physical resource occupied by the second channel is determined based on a physical resource occupied by the first channel or the third channel.

13. The method according to claim 12, wherein the sixth information is transmitted by a second device to the first device in response to the acknowledgment information, and the second device is a device transmitting the first information.

14. The method according to claim 13, wherein an interval between an end position in the time domain of the sixth information and a start position in the time domain of the second channel is greater than or equal to a second threshold.

15. The method according to claim 12, wherein the first device transmits the acknowledgment information and the sixth information simultaneously.

16. The method according to any one of claims 1 to 9, wherein
a physical resource occupied by the second channel is indicated by fourth information, wherein the fourth information is used to indicate the first channel; or
a physical resource occupied by the second channel is indicated by sixth information; or
a physical resource occupied by the second channel is determined based on a physical resource occupied by the first channel.

17. The method according to any one of claims 12 to 16, wherein the sixth information comprises identification information of the first channel.

18. The method according to any one of claims 1 to 17, wherein in a case where the first information is not correctly received, the first device does not transmit the second channel or the second channel carries invalid information.

19. The method according to any one of claims 1 to 18, wherein the encoding comprises at least one of:
channel encoding;
encoding implemented based on a predefined algorithm or model; or
other processing schemes for processing original information and introducing additional information.

20. The method according to claim 19, wherein the channel encoding comprises at least one of:
low-density parity-check (LDPC) encoding, Polar encoding, Turbo encoding, convolutional encoding, or Reed-Muller (RM) encoding.

21. A method for wireless communication, performed by a second device, the method comprising:
transmitting first information on a first channel, wherein the first information is encoded and carried on a first channel for transmission; and
receiving second information transmitted on a second channel, wherein the second information is information related to the first channel, and the second information is transmitted in response to the first information being correctly received.

22. The method according to claim 21, wherein the second information is generated based on the first information.

23. The method according to claim 22, wherein the second information is generated based on third information, wherein the third information is acquired by a first device processing the first information using a first encoding scheme; and the first information is processed by the second device using the first encoding scheme and is transmitted to the first device.

24. The method according to any one of claims 21 to 23, wherein the second information comprises channel information corresponding to a physical resource occupied by the first information.

25. The method according to claim 24, wherein the second information comprises a plurality of pieces of sub-information, and the physical resource occupied by the first information comprises a plurality of physical resource elements, wherein each of the plurality of pieces of sub-information comprises channel information corresponding to at least one of the plurality of physical resource elements.

26. The method according to any one of claims 21 to 25, wherein the first information is data information, the first channel carries a reference signal, and the first channel further carries information acquired by encoding the data information.

27. The method according to any one of claims 21 to 26, wherein the first channel is a channel indicated by fourth information, or the first channel is an available channel within each period, wherein the available channel is determined based on a periodic parameter.

28. The method according to claim 27, wherein the available channel satisfies at least one of:
a channel for actual transmission;
a channel configured and not discarded or canceled; or
a channel satisfying a specific condition, wherein the channel satisfying a specific condition comprises one of: a downlink data channel, an uplink data channel, a physical downlink shared channel (PDSCH), a semi-persistently scheduled PDSCH, a physical uplink shared channel (PUSCH), a configured grant PUSCH, a channel with priority meeting a condition, and a channel with a transmission bandwidth greater than or equal to a first threshold.

29. The method according to claim 27 or 28, wherein the available channel within the each period is:
an available channel with all time-domain resources falling within the period and with an earliest start position in a time domain; or
an available channel with all time-domain resources falling within the period and with an earliest end position in a time domain.

30. The method according to any one of claims 21 to 29, further comprising:
receiving, on a third channel, acknowledgment information corresponding to the first information or acknowledgment information corresponding to the first channel transmitted, wherein the third channel is transmitted no later than the second channel in a time domain.

31. The method according to claim 30, wherein
a physical resource occupied by the third channel is indicated by fifth information; or
a physical resource occupied by the third channel is determined based on a physical resource occupied by the first channel.

32. The method according to claim 30 or 31, wherein
a physical resource occupied by the second channel is indicated by sixth information; or
a physical resource occupied by the second channel is determined based on a physical resource occupied by the first channel or the third channel.

33. The method according to claim 32, wherein the sixth information is transmitted by the second device to the first device in response to the acknowledgment information.

34. The method according to claim 33, wherein an interval between an end position in the time domain of the sixth information and a start position in the time domain of the second channel is greater than or equal to a second threshold.

35. The method according to claim 32, wherein the acknowledgment information and the sixth information are simultaneously transmitted by a first device.

36. The method according to any one of claims 21 to 29, wherein
a physical resource occupied by the second channel is indicated by fourth information, wherein the fourth information is used to indicate the first channel; or
a physical resource occupied by the second channel is indicated by sixth information; or
a physical resource occupied by the second channel is determined based on a physical resource occupied by the first channel.

37. The method according to any one of claims 32 to 36, wherein the sixth information comprises identification information of the first channel.

38. The method according to any one of claims 21 to 37, wherein in a case where the first information is not correctly received, the first device does not transmit the second channel or the second channel carries invalid information.

39. The method according to any one of claims 21 to 38, wherein the encoding comprises at least one of:
channel encoding;
encoding implemented based on a predefined algorithm or model; or
other processing schemes for processing original information and introducing additional information.

40. The method according to claim 39, wherein the channel encoding comprises at least one of:
low-density parity-check (LDPC) encoding, Polar encoding, Turbo encoding, convolutional encoding, or Reed-Muller (RM) encoding.

41. An apparatus for wireless communication, comprising:
a transmitting module, configured to transmit second information on a second channel upon correctly receiving first information, wherein the first information is encoded and carried on a first channel for transmission, and the second information is information related to the first channel.

42. An apparatus for wireless communication, comprising:
a transmitting module, configured to transmit first information on a first channel, wherein the first information is encoded and carried on a first channel for transmission; and
a receiving module, configured to receive second information transmitted on a second channel, wherein the second information is information related to the first channel, and the second information is transmitted in response to the first information being correctly received.

43. A device, comprising: a processor and a memory storing one or more executable instructions, wherein the processor, when loading and executing the one or more executable instructions, is caused to perform the method for wireless communication as defined in any one of claims 1 to 20 or the method for wireless communication as defined in any one of claims 21 to 40.

44. A computer-readable storage medium, storing one or more executable instructions, wherein the one or more executable instructions, when loaded and executed by a processor, cause the processor to perform the method for wireless communication as defined in any one of claims 1 to 20 or the method for wireless communication as defined in any one of claims 21 to 40.

45. A chip, comprising: programmable logical circuitry or one or more programs, wherein the chip, when running, is configured to cause a device equipped with the chip to perform the method for wireless communication as defined in any one of claims 1 to 20 or the method for wireless communication as defined in any one of claims 21 to 40.

46. A computer program product or computer program, comprising: one or more computer instructions stored in a computer-readable storage medium, wherein the one or more computer instructions, when loaded and executed by a processor of a computer device, cause the computer device to perform the method for wireless communication as defined in any one of claims 1 to 20 or the method for wireless communication as defined in any one of claims 21 to 40.
